# FASCICULE DE BREVET EUROPEEN

(11) **EP 0 810 400 B1**
(45) Date de publication et mention de la délivrance du brevet: **11.12.2002**
(21) Numéro de dépôt: 97401169.4
(22) Date de dépôt: 28.05.1997
(51) Int. Cl.: F21V 17/00, F21V 19/00

(54) **Projecteur, notamment pour véhicule automobile, présentant une structure mécanique perfectionnée**
Scheinwerfer, insbesondere für Kraftfahrzeuge, mit einer verbesserten mechanischen Struktur
Light projector, especially for vehicles, having an enhanced mechanical structure

(30) Priorité: 30.05.1996 FR 9606661
(43) Date de publication de la demande: 03.12.1997
(73) Titulaire: VALEO VISION, 93000 Bobigny (FR)
(72) Inventeur: Josouin, Daniel, 77290 Mitry Mory (FR)
(74) Mandataire: Le Forestier, Eric

(56) Documents cités:
- EP-A- 0 548 555
- DE-C- 4 323 118
- FR-A- 1 442 908
- FR-A- 2 424 155
- US-A- 5 402 325

## Description

La présente invention a trait d'une façon générale aux projecteurs de véhicules automobiles.

Elle concerne plus particulièrement une nouvelle structure de projecteur qui principalement permette de réaliser une étanchéité satisfaisante entre un porte-lampe et le miroir du projecteur, et par des moyens intimement associés, permette également de remplir d'autres fonctions de montage ou d'étanchéité d'une manière extrêmement simple et économique.

On connaît par DE-C-43 23 118 un projecteur selon le préambule de la revendication 1, qui comporte un porte-lampe rapporté sur l'arrière du projecteur par vissage. Dans cette antériorité, la lampe est montée sur ce porte-lampe avec une étanchéité spécifique et non pas directement sur l'arrière du miroir. Il en résulte d'un risque accru d'imprécision du positionnement de la lampe par rapport à la surface réfléchissante du miroir, et donc un risque de défaut dans le faisceau lumineux engendré.

En outre, ce porte-lampe présente des inconvénients d'être relativement encombrant, de présenter une forme complexe relativement difficile à fabriquer et d'être long et fastidieux à monter.

La présente invention vise à pallier ces inconvénients de l'état de la technique, et à proposer un projecteur dont la structure soit simplifiée et dont le montage soit plus aisé, grâce à une coopération d'étanchéité particulière entre un porte-lampe amovible et une pièce additionnelle ayant au moins une autre fonction au niveau de l'arrière du miroir.

Ainsi la présente invention propose un projecteur tel que défini dans la revendication 1.

Des aspects préférés, mais non limitatifs, du projecteur selon l'invention sont définis dans les revendications dépendantes.

D'autres aspects, buts et avantages de la présente invention apparaîtront mieux à la lecture de la description détaillée suivante de formes de réalisation préférées de celle-ci, donnée à titre d'exemple et faite en référence aux dessins annexés, sur lesquels :
la figure 1 est une vue partielle en perspective coupée d'un projecteur selon une première forme de réalisation de l'invention,
la figure 2 est une vue partielle en coupe axiale d'une variante de cette première forme de réalisation,
la figure 3 est une vue partielle en coupe axiale d'un projecteur selon une deuxième forme de réalisation de l'invention,
la figure 4 est une vue en plan de l'arrière d'un élément du projecteur de la figure 3,
la figure 5 est une vue partielle en perspective éclatée de deux éléments du projecteur de la figure 3,
la figure 6 est une vue partielle en coupe axiale d'un projecteur selon une troisième forme de réalisation de l'invention.
la figure 7 est une vue en plan de l'arrière d'un élément du projecteur de la figure 6,
la figure 8 est une vue partielle en perspective éclatée de deux éléments du projecteur de la figure 6,
la figure 9 est une vue partielle en coupe axiale d'un projecteur selon une quatrième forme de réalisation de l'invention,
la figure 10 est une vue en plan de l'arrière d'un élément du projecteur de la figure 9,
la figure 11 est une vue partielle en coupe axiale d'un projecteur selon une cinquième forme de réalisation de l'invention, et
la figure 12 est une vue à échelle agrandie et éclatée d'un détail du projecteur de la figure 11.

On notera préliminairement que, d'un mode de réalisation à l'autre, des éléments ou parties identiques ou similaires sont désignés dans la mesure du possible par les mêmes signes de référence, et ne seront pas systématiquement décrits à chaque fois.

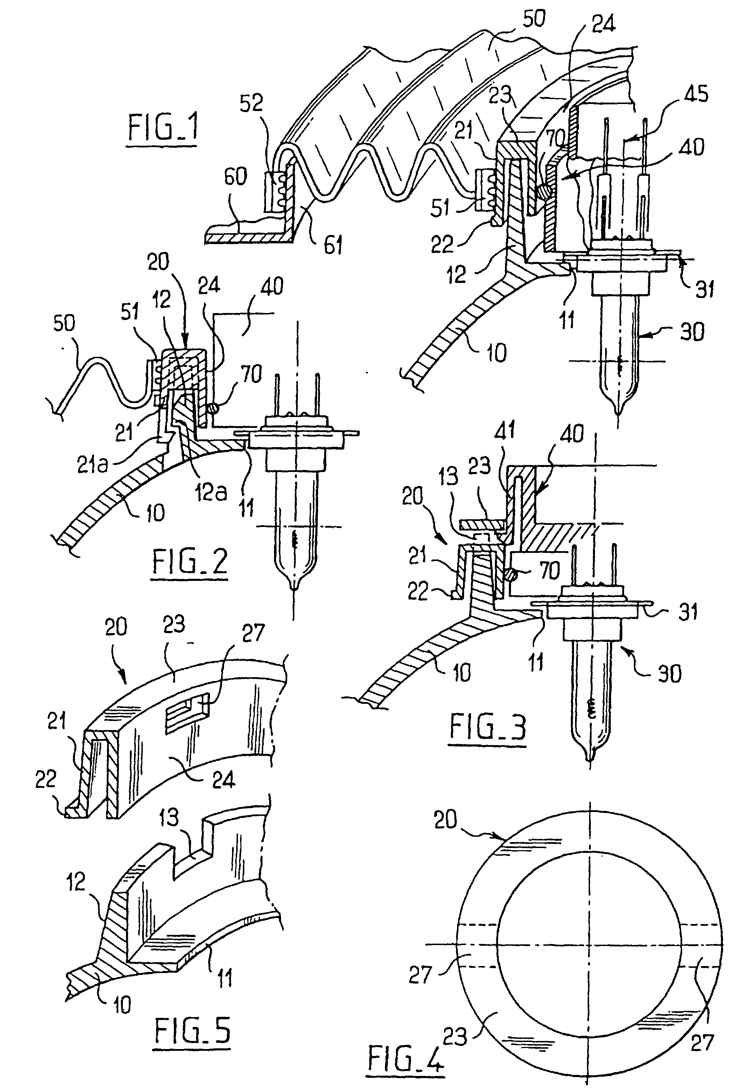

En référence tout d'abord à la figure 1, on a représenté une partie d'un projecteur comprenant un miroir 10 dans le fond duquel est formé un trou 11 pour une lampe 30 pourvue d'une collerette d'appui 31.

La lampe est montée sur un porte-lampe généralement cylindrique et creux 40 apte à recevoir un connecteur 45 pour l'alimentation de la lampe.

Naturellement, le projecteur comporte également une glace (non représentée), et le cas échéant un boîtier.

A l'arrière du miroir 10, autour du trou de lampe 11 et de préférence de façon concentrique à celui-ci, est venue de moulage une collerette généralement cylindrique 12.

Sur cette collerette est fixée une bague 20 présentant une section en forme générale de "U", avec une paroi cylindrique extérieure 21, une paroi cylindrique intérieure 24 et.un sommet 23 réunissant lesdites parois 21, 24.

La face extérieure de la paroi 21 est destinée à coopérer avec un joint d'étanchéité 51, par exemple du type à triple lèvre, prévu à la circonférence intérieure d'une bonnette annulaire 50 en forme de soufflet. On observera ici qu'un épaulement sortant 22 prévu à la base de la paroi extérieure 21 de la bague 20 permet d'éviter le glissement du joint 51 au delà des limites autorisées.La circonférence extérieure de ladite bonnette 50 comporte un autre joint d'étanchéité similaire 52 destiné à coopérer avec la face extérieure d'un rebord sortant 61 d'un boîtier du projecteur.

On notera ici que la déformabilité de la bonnette 50 en forme de soufflet permet d'absorber les déplacements relatifs entre le miroir 10 et le boîtier 60 lors des réglages de faisceau.

Par ailleurs, la face intérieure de la paroi 24 de la bague 20 est destinée à coopérer avec un joint d'étanchéité 70, en l'espèce un joint torique, opérant entre la bague et la périphérie extérieure du porte-lampe 40, lors de la mise en place dudit porte-lampe. Le joint 70 est maintenu en place en étant retenu par exemple dans une cavité à fond arrondi formée sur le pourtour du porte-lampe.

Ainsi, selon une caractéristique de l'invention, une pièce unique rapportée à l'arrière du miroir 10 permet de réaliser deux surfaces d'étanchéité pour des joints coopérant d'un côté avec la bonnette, et de l'autre avec le porte-lampe. Par ailleurs, l'invention permet d'utiliser des porte-lampes standard du marché, pré-équipés avec un joint torique. Au surplus, l'invention permet de concevoir la bonnette de façon totalement indépendante du type de porte-lampe utilisé, seule la forme et les dimensions de la face externe de la bague étant à prendre en compte pour la bonnette.

Dans la forme de réalisation de la figure 1, la bague 20 est fixée sur la collerette 12 par vissage, avec par exemple un filetage formé sur la face extérieure de la collerette 12 et un taraudage correspondant formé sur la face intérieure de la paroi 21 de la bague.

La figure 2 illustre une variante de réalisation de l'invention, dans laquelle la paroi extérieure 21 de la bague possède une pluralité de pattes flexibles à dents d'encliquetage 21a destinées à coopérer selon une relation d'accrochage avec des épaulements 12a délimitant autant de renfoncements formés dans la collerette 12.

La bague 20 est dans ce cas montée par simple translation axiale, avec déformation élastique temporaire des pattes flexibles.

On observera ici que les épaulements 12a sont de préférence définis par le fond d'ouvertures traversant le miroir au niveau de la collerette 12 et orientées selon la direction de démoulage du miroir. De la sorte, le moulage du miroir ne nécessite pour cet aménagement aucune partie mobile telle que tiroir ou coulisseau.

On va maintenant décrire en référence aux figures 3 à 5 une forme de réalisation de l'invention dans laquelle la bague 20 tient lieu également de moyens pour la fixation du porte-lampe 40.

A cet effet, la bague 20 possède, de préférence en deux emplacements diamétralement opposés, deux passages 27 traversants en direction radiale. On observera ici que ces passages peuvent traverser soit seulement la paroi intérieure 24 de la bague, soit ses deux parois 21, 24, comme illustré, notamment pour des questions de facilité de moulage. Dans l'alignement des passages 27, des encoches 13 sont par ailleurs ménagées dans la collerette 12.

En des positions angulaires correspondantes, en l'espèce deux positions diamétralement opposées, le porte-lampe 40 possède des languettes flexibles 41 pourvues à leurs extrémités libres, tournées vers l'intérieur du projecteur, de dents d'accrochage destinées à coopérer avec les bords postérieurs (bords supérieurs sur la figure 5) des passages 27 formés dans la bague 20.

On réalise ainsi un montage du porte-lampe 40 portant la lampe 30 par simple encliquetage se produisant à la suite d'un mouvement de translation axiale.

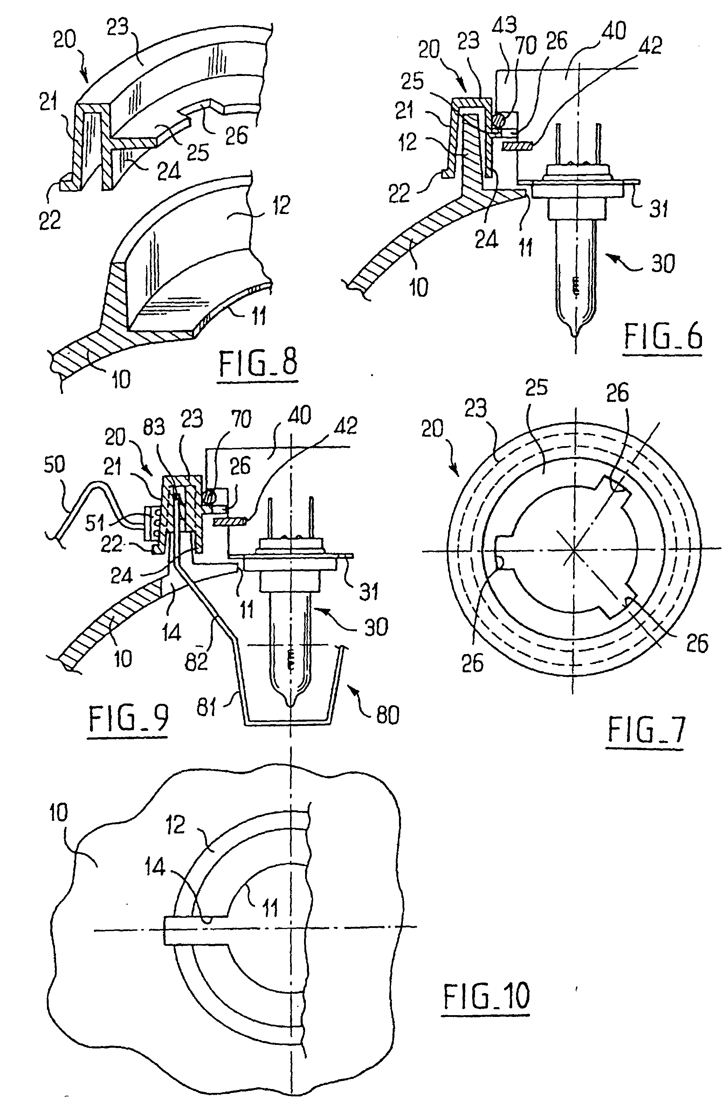

En référence maintenant aux figures 6 à 8, on a représenté une autre forme de réalisation dans laquelle la bague 20 forme des moyens de montage du porte-lampe. Dans celle-ci, la bague 20 comporte une collerette 25 dirigée radialement vers l'intérieur, et délimitant une ouverture généralement circulaire. Dans cette collerette radiale 25 sont formées une pluralité d'encoches 26 de forme générale rectangulaire, par exemple trois encoches réparties angulairement de façon régulière ou non.

Le porte-lampe 40 comporte une partie élargie 43 formant un gradin avec sa partie principale destinée à être engagée dans l'ouverture centrale de la bague 20.

Entre ce gradin et la partie de plus grand diamètre de la collerette radiale 25 est interposé un joint d'étanchéité, par exemple un joint torique 70.

Le porte-lampe 40 comporte par ailleurs une pluralité de languettes 42 saillantes radialement vers l'extérieur, dans des positions angulaires correspondant à celles des encoches 26.

De cette manière, on réalise un montage du porte-lampe 40 du type à baïonnette, le porte-lampe étant amené sur l'arrière du réflecteur par translation avec une orientation telle que ses languettes 42 franchissent les encoches 26. A la suite de cela, une rotation du porte-lampe sur une étendue angulaire limitée permet d'assurer la retenue de celui-ci. On observera ici qu'au cours de ces opérations de montage, le joint torique 70 est comprimé pour assurer l'étanchéité entre le porte-lampe 40 et la bague 20.

Les figures 9 et 10 illustrent une autre forme de réalisation qui reprend le mécanisme de fixation du porte-lampe tel que décrit ci-dessus.

Mais dans ce cas, il est prévu en outre que la bague 20 tienne lieu en même temps de moyen de support d'un occulteur 80, formant notamment cache de lumière directe, associé à la lampe.

Un tel occulteur comprend de façon classique une coiffe 81 destinée à venir se placer en avant de la lampe pour éviter l'émission d'un rayonnement direct éblouissant.

A partir de cette coiffe s'étend en direction du miroir un bras de liaison 82.

Selon cet aspect de l'invention, il est prévu dans le miroir 10, au niveau de la collerette 12, une encoche radiale 14 qui s'étend à la fois dans la partie formant miroir proprement-dit et dans toute la profondeur de la collerette, de manière à laisser localement dégagée sur l'espace intérieur du miroir la cavité définie par la bague 20 entre ses parois extérieure et intérieure 21 et 24.

En outre, le bras de liaison 82 de l'occulteur 80 possède un prolongement 83 dans lequel sont formées par découpage et pliage des griffes saillantes formant harpon.

L'occulteur est fixé en position en engageant à force ce prolongement 83 dans la cavité définie par la bague 20, via l'encoche 14 formée dans le miroir, les griffes venant réaliser un accrochage ferme de l'occulteur dans la matière de la bague 20. Naturellement, on peut prévoir sur l'occulteur une pluralité de bras 82 munis de leurs prolongements, et autant d'encoches 14 dans le miroir 10.

On réalise ainsi, d'une manière extrêmement simple et efficace, le montage de l'occulteur 80 dans le projecteur.

On observera ici que, si la taille de la partie 81 de l'occulteur lui permet de traverser l'ouverture 11 prévue au fond du miroir, on peut avantageusement réaliser un pré-montage de la bonnette, de la bague et de l'occulteur, l'ensemble étant mis en place par l'arrière du miroir.

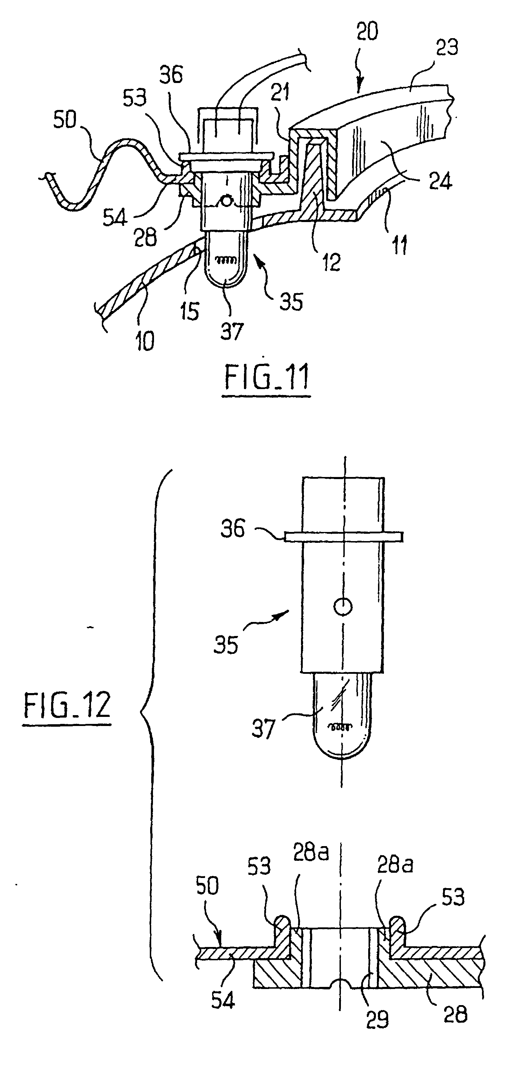

Maintenant en référence au figures 11 et 12, on a représenté une autre forme de réalisation de l'invention dans laquelle la bague 20 forme en même temps un support pour une douille de lampe de ville.

Une lampe de ville est montée de façon classique en un emplacement défocalisé d'un miroir de projecteur. Dans ce cas, la bague 20 possède localement un prolongement 28 dirigé radialement vers l'extérieur, prolongement dans lequel est formée une ouverture 29 entourée d'une petite collerette 28a.

Afin d'assurer l'étanchéité du projecteur, la bonnette en soufflet 50 possède un prolongement plan 54 dans lequel est formée une autre ouverture entourée par un bourrelet 53, ledit prolongement 54 étant apte à recouvrir le prolongement 28 de la bague, de telle sorte que la collerette 28a pénètre dans l'ouverture du prolongement 54.

L'ensemble définit une ouverture pour le passage et la retenue d'une douille 35 dans laquelle est reçue une lampe de ville 37 et pourvue d'une collerette radiale postérieure 36 qui vient s'appuyer contre le sommet du bourrelet 53 de la bonnette 50. Naturellement, le miroir 10 comporte au droit de l'ouverture formée conjointement par la bague et par la bonnette une ouverture 15 permettant à la lampe 37 de pénétrer dans l'espace intérieur du miroir.

Cette solution, par rapport aux solutions classiques (montage direct de la douille 35 dans le miroir), cette solution présente plusieurs avantages. Tout d'abord, l'ouverture à pratiquer dans le miroir est réduite à une taille minimale, cette ouverture n'ayant pas à être traversée par la douille 37. A cet égard, les jeux dimensionnels entre le miroir et la bague pouvant être très réduits, le surdimensionnement de l'ouverture 15 pour compenser ces jeux est également réduit au minimum.

En outre, la douille 35 pour la lampe de ville n'étant plus en contact avec le matériau du miroir, elle est exposée à des températures sensiblement réduites, et les dispositions à prendre sur ce plan sont simplifiées.

Ensuite, étant donné que la bonnette 50 elle-même, par son bourrelet 53, est apte à jouer le rôle du joint d'étanchéité-dans les montages conventionnels, le nombre de pièces nécessaires est réduit.

Enfin, l'ensemble bague-bonnette-douille peut être pré-assemblé facilement pour être monté dans le projecteur en une seule opération, ce qui simplifie la procédure de montage et en diminue les coûts. En corollaire, le démontage de la douille 35 pour le remplacement de la lampe est simplifié, car la douille est directement accessible à l'extérieur du projecteur.

On observera ici que les formes de réalisation des figures 3 à 12 peuvent également être adoptées dans le cas où la bonnette 50 n'est pas prévue, c'est-à-dire dans le cas où la face externe de la bague n'a pas de fonction d'étanchéité (cas notamment des blocs optiques ou projecteurs sans boîtier).

## Revendications

1. Projecteur de véhicule notamment automobile, comprenant une lampe (30) montée sur un porte-lampe (40), un miroir (10) comportant en son fond une ouverture (11) pour la lampe, et des moyens de montage du porte-lampe de façon solidaire du miroir, projecteur **caractérisé en ce que** le porte-lampe (40) est apte à maintenir la lampe directement contre le miroir dans une position de référence, **en ce qu'**il comprend en outre une pièce (20) distincte du porte-lampe, rapportée sur le miroir, coopérant avec des moyens d'étanchéité(70) prévus entre le porte-lampe et ladite pièce, et comportant en outre au moins un aménagement (21; 27; 25, 26; 28), **en ce que** ladite pièce (20) consiste en une bague présentant un profil en forme générale de « U », engagée sur une collerette (12) formée d'un seul tenant à l'arrière du miroir autour de l'ouverture pour la lampe et chevauchant ladite collerette, **en ce que** ladite bague coopère avec les moyens d'étanchéité (70) au niveau d'une surface intérieure (24), et **en ce que** ledit aménagement (21 ; 27; 25, 26; 28) intervient dans une fonction choisie parmi l'étanchéité avec d'autres composants (50) du projecteur, la fixation de sources lumineuses (30 ; 37) et la fixation de moyens d'occultation (80).

2. Projecteur selon la revendication 1, **caractérisé en ce qu'**il comprend en outre un boîtier (60) possédant une ouverture postérieure et une bonnette (50) apte à constituer une paroi étanche entre ledit boîtier, autour de son ouverture postérieure, et le porte-lampe (40), et **en ce que** la bague présente une surface extérieure (21) destinée à coopérer avec des seconds moyens d'étanchéité (51) prévus sur la bonnette.

3. Projecteur selon l'une des revendications 1 et 2, **caractérisé en ce que** la bague (20) et la collerette (12) possèdent des filetages complémentaires pour la fixation de la bague par vissage.

4. Projecteur selon l'une des revendications 1 et 2, **caractérisé en ce que** la bague (20) et la collerette (12) possèdent des aménagements (21a, 12a) pour une fixation de la bague par encliquetage.

5. Projecteur selon l'une des revendications 1 à 4, **caractérisé en ce que** la bague (20) possède également des aménagements (27; 25, 26) pour la fixation du porte-lampe (40) sur ladite bague.

6. Projecteur selon la revendication 5, **caractérisé en ce que** ledits aménagements pour la fixation du porte-lampe comprennent une pluralité d'ouvertures (27) destinées à recevoir des dents formées sur des pattes flexibles (41) solidaires du porte-lampe (40).

7. Projecteur selon la revendication 5, **caractérisé en ce que** ledits aménagements pour la fixation du porte-lampe comprennent une collerette intérieure (25) dans laquelle sont formées une pluralité d'encoches (26) aptes à être franchies par des pattes saillantes (42) solidaires du porte-lampe, une rotation dudit porte-lampe assurant un verrouillage desdites pattes en arrière de la collerette intérieure, avec mise en compression desdits premiers moyens d'étanchéité (70).

8. Projecteur selon l'une des revendications 1 à 7, **caractérisé en ce que** ladite bague comporte des aménagements pour la fixation d'au moins un bras (82, 83) de support d'un occulteur (80) associé à la lampe, et **en ce que** le miroir possède au droit de chaque aménagement une ouverture (14) pour le passage d'un bras associé,

9. Projecteur selon la revendication 8, **caractérisé en ce que** ladite ouverture pour le passage d'un bras présente la forme d'une encoche (14) s'étendant généralement radialement à partir du trou de lampe (11).

10. Projecteur selon l'une des revendications 8 et 9, **caractérisé en ce que** le ou chaque bras de support (82, 83) possède à son extrémité libre (83) des moyens d'accrochage dans la cavité de la bague définie entre les branches (21, 24) du "U".

11. Projecteur selon l'une des revendications 1 à 10, **caractérisé en ce que** la bague comporte un prolongement radial (28) dans lequel est formée une ouverture pour une douille (35) de lampe de ville, et **en ce que** le miroir possède une ouverture (15) pour ladite lampe de ville au droit de l'ouverture formée dans ledit prolongement (28).

12. Projecteur selon la revendication 11, **caractérisé en ce que** la bonnette comporte une partie (54) recouvrant ledit prolongement radial (28) de la bague (20), ladite partie de la bonnette possédant une ouverture pour le passage de la douille, ladite ouverture étant entourée par une surépaisseur(53) formant des troisièmes moyens d'étanchéité en contact avec ladite douille (35).

## Patentansprüche

1. Fahrzeugscheinwerfer insbesondere für Kraftfahrzeuge, mit einer an einer Lampenfassung (40) befestigten Lampe (30), einem Reflektor (10), der an seinem Boden eine Öffnung (11) für die Lampe aufweist, und Mitteln zum festen Anbringen der Lampenfassung am Reflektor,
**dadurch gekennzeichnet, dass** die Lampenfassung (40) die Lampe unmittelbar am Reflektor in einer Bezugsposition zu halten vermag, dass der Scheinwerfer zudem ein von der Lampenfassung separates Teil (20) umfasst, das auf den Reflektor aufgesetzt ist und mit Dichtungsmitteln (70) zusammenwirkt, die zwischen der Lampenfassung und diesem Teil vorgesehen sind, und zudem wenigstens eine Einrichtung (21; 27; 25, 26; 28) aufweist, dass dieses Teil (20) aus einem Ring besteht, der ein allgemein U-förmiges Profil aufweist und auf einen hinter dem Reflektor um die Lampenöffnung herum einstückig ausgebildeten Kragen (12) aufgesteckt ist und diesen umgreift, dass der Ring mit den Dichtungsmitteln (70) an einer Innenseite (24) zusammenwirkt, und dass die Einrichtung (21; 27; 25, 26; 28) zusammen mit anderen Bauteilen (50) des Scheinwerfers, der Befestigung der Lichtquellen (30; 37) und der Befestigung von Abschattungsmitteln (80) die Aufgabe des Abdichtens hat.

2. Scheinwerfer nach Anspruch 1,
**dadurch gekennzeichnet, dass** er femer ein Gehäuse (60) umfasst, das eine hintere Öffnung und eine Kappe (50) besitzt, die zwischen dem Gehäuse um dessen Öffnung herum und der Lampenfassung (40) eine dichte Wand zu bilden vermag, und dass der Ring eine Außenseite (21) aufweist, die mit den zweiten an der Kappe vorgesehenen Dichtungsmitteln (51) zusammenzuwirken vermag.

3. Scheinwerfer nach einem der Ansprüche 1 oder 2,
**dadurch gekennzeichnet, dass** der Ring (20) und der Kragen (12) komplementäre Gewinde zur Befestigung des Rings durch Verschrauben besitzen.

4. Scheinwerfer nach einem der Ansprüche 1 oder 2,
**dadurch gekennzeichnet, dass** der Ring (20) und der Kragen (12) Einrichtungen (21a, 12a) für eine Befestigung des Rings durch Verrasten besitzen.

5. Scheinwerfer nach einem der Ansprüche 1 bis 4,
**dadurch gekennzeichnet, dass** der Ring (20) auch Einrichtungen (27; 25, 26) zur Befestigung der Lampenfassung (40) an dem Ring besitzt.

6. Scheinwerfer nach Anspruch 5,
**dadurch gekennzeichnet, dass** die Einrichtungen zur Befestigung der Lampenfassung eine Vielzahl von Öffnungen (27) aufweisen, die zur Aufnahme von Zähnen dienen, die an elastischen, mit der Lampenfassung (40) fest verbundenen Laschen (41) ausgebildet sind.

7. Scheinwerfer nach Anspruch 5,
**dadurch gekennzeichnet, dass** die Einrichtungen zur Befestigung der Lampenfassung einen Innenkragen (25) aufweisen, an dem eine Vielzahl von Aussparungen (26) ausgebildet ist, die von vorstehenden, fest mit der Lampenfassung verbundenen Laschen (42) passiert werden können, wobei eine Drehung der Lampenfassung eine Blockierung der Laschen hinter dem Innenkragen gewährleistet und die ersten Dichtungsmittel komprimiert werden.

8. Scheinwerfer nach einem der Ansprüche 1 bis 7,
**dadurch gekennzeichnet, dass** der Ring Einrichtungen zur Befestigung von wenigstens einem Arm (82, 83) zum Halten eines der Lampe zugehörigen Abschatters (80) aufweist, und dass der Reflektor rechtwinklig zu jeder Einrichtung eine Öffnung (14) zum Hindurchführen eines zugehörigen Arms besitzt.

9. Scheinwerfer nach Anspruch 8,
**dadurch gekennzeichnet, dass** die Öffnung zum Hindurchführen eines Arms die Form einer Aussparung (14) aufweist, die von der Lampenöffnung (11) ausgehend allgemein radial vertäuft.

10. Scheinwerfer nach einem der Ansprüche 8 oder 9,
**dadurch gekennzeichnet, dass** der bzw. jeder Haltearm (82, 83) an seinem freien Ende (83) Mittel zum Einhaken in die zwischen den Armen (21, 24) des U ausgebildete Vertiefung des Rings besitzt.

11. Scheinwerfer nach einem der Ansprüche 1 bis 10,
**dadurch gekennzeichnet, dass** der Ring eine radiale Verlängerung (28) aufweist, in der eine Öffnung für eine Standlichtlampenfassung (35) ausgebildet ist, und dass der Reflektor rechtwinklig zur der in der Verlängerung (28) ausgebildeten Öffnung eine Öffnung (15) für die Standlichtlampe besitzt.

12. Scheinwerfer nach Anspruch 11,
**dadurch gekennzeichnet, dass** die Kappe ein Teil (54) aufweist, das die radiale Verlängerung (28) des Rings (20) bedeckt, wobei das Kappenteil eine Öffnung zum Hindurchführen der Fassung besitzt und die Öffnung von einer Verdickung (53) umgeben ist, die dritte Dichtungsmittel in Kontakt mit der Fassung (35) bildet.

## Claims

1. Vehicle headlight, in particular for a car, comprising a lamp (30) mounted on a lamp holder (40), a mirror (10) having in its bottom an opening (11) for the lamp, and means of mounting the lamp holder so as to be fixed to the mirror, a headlight **characterised in that** the lamp holder (40) is able to hold the lamp directly against the mirror in a reference position, **in that** it also comprises a part (20) distinct from the lamp holder, attached to the mirror, cooperating with sealing means (70) provided between the lamp holder and the said part, and also having at least one fitting (21; 27; 25, 26; 28), **in that** the said part (20) consists of a ring having a profile in the general shape of a U, engaged on a collar (12) formed in a single piece at the rear of the mirror around an opening for the lamp and straddling the said collar, **in that** the said ring. cooperates with the sealing means (70) at an internal surface (24), and **in that** the said fitting (21; 27; 25, 26; 28) acts in a function chosen from amongst sealing with other components (50) of the headlight, the fixing of light sources (30; 37) and the fixing of masking means (80).

2. Headlight according to Claim 1, **characterised in that** it also comprises a housing (60) having a rear opening and a bonnet (50) able to constitute a sealed wall between the said housing, around its rear opening, and the lamp holder (40), and **in that** the ring has an external surface (21) intended to cooperate with second sealing means (51) provided on the bonnet.

3. Headlight according to one of Claims 1 and 2, **characterised in that** the ring (20) and the collar (12) have complementary threads for fixing the ring by screwing.

4. Headlight according to one of Claims 1 and 2, **characterised in that** the ring (20) and the collar (12) have fittings (21a, 12a) for fixing the ring by snapping on.

5. Headlight according to one of Claims 1 to 4, **characterised in that** the ring (20) also has fittings (27; 25, 26) for fixing the lamp holder (40) to the said ring.

6. Headlight according to Claim 5, **characterised in that** the said fittings for fixing the lamp holder comprise a plurality of openings (27) intended to receive teeth formed on flexible lugs (41) secured to the lamp holder (40).

7. Headlight according to Claim 5, **characterised in that** the said fittings for fixing the lamp holder comprise an internal collar (25) in which there are formed a plurality of notches (26) able to have projecting lugs (42) integral with the lamp holder pass through them, a rotation of the said lamp holder providing a locking of the said lugs at the rear of the internal collar, with compression of the said first sealing means (70).

8. Headlight according to one of Claims 1 to 7, **characterised in that** the said ring has fittings for fixing at least one arm (82, 83) for supporting a mask (80) associated with the lamp, and **in that** the mirror has, in line with each fitting, an opening (14) for the passage of an associated arm.

9. Headlight according to Claim 8, **characterised in that** the said opening for the passage of an arm has the form of a notch (14) extending generally radially from the lamp hole (11).

10. Headlight according to one of Claims 8 and 9, **characterised in that** the or each support arm (82, 83) has at its free end (83) means of hooking in the cavity in the ring defined between the legs (21, 24) of the U.

11. Headlight according to one of Claims 1 to 10, **characterised in that** the ring has a radial extension (28) in which an opening is formed for a dim driving lamp socket (35), and **in that** the mirror has an opening (15) for the said dim driving lamp in line with the opening formed in the said extension (28).

12. Headlight according to Claim 11, **characterised in that** the bonnet has a portion (54) covering the said radial extension (28) of the ring (20), the said part of the bonnet having an opening for the socket to pass, the said opening being surrounded by a thicker portion (53) forming third sealing means in contact with the said socket (35).
